Europäisches Patentamt

European Patent Office

Office européen des brevets

(19)

(11) **EP 0 671 542 B1**

(12) **FASCICULE DE BREVET EUROPEEN**

(45) Date de publication et mention
de la délivrance du brevet:
**10.05.2000 Bulletin 2000/19**

(51) Int Cl.⁷: **E06B 9/82**, G05B 19/10

(21) Numéro de dépôt: **95810112.3**

(22) Date de dépôt: **20.02.1995**

(54) **Dispositif d'entraînement par moteur électrique comprenant des moyens de mesure du déplacement du corps entraîné**

Mit einem elektrischen Motor angetriebenen Vorrichtung mit Mitteln zum Messen der Bewegung eines angetriebenen Körpers

Electric motor driven device including means for measuring the movement of the driven body

(84) Etats contractants désignés:
**AT BE CH DE ES GB IT LI NL SE**

(30) Priorité: **02.03.1994 FR 9402397**

(43) Date de publication de la demande:
**13.09.1995 Bulletin 1995/37**

(73) Titulaire: **SOMFY**
**F-74300 Cluses (FR)**

(72) Inventeurs:
• **Vanderschaeghe, Christian**
**F-74300 Cluses (FR)**

• **Bruno, Serge**
**F-74950 Scionzier (FR)**

(74) Mandataire: **Meylan, Robert Maurice et al**
**c/o BUGNION S.A.**
**10, route de Florissant**
**Case Postale 375**
**1211 Genève 12 - Champel (CH)**

(56) Documents cités:
**DE-A- 3 803 119**     **FR-A- 2 671 129**
**US-A- 5 170 108**

## Description

La présente invention concerne un dispositif d'entraînement d'un corps au moyen d'un moteur électrique, comprenant des moyens mécaniques de mesure du déplacement dudit corps liés cinématiquement au corps et équipés d'interrupteurs actionnés par lesdits moyens en certains points du trajet dudit corps.

Dans de nombreux cas, en particulier dans le cas de dispositifs de fermeture ou de protection solaire motorisés, tels que portes, volets, ou stores, le corps arrive en butée en position ouverte et/ou en position fermée et, il est généralement important que le corps arrive parfaitement en butée en fin de course. C'est par exemple le cas des stores de type "cassette" dont l'extrémité de la toile est reliée à un profilé de fermeture qui, lorsque le store est complètement enroulé, vient s'appliquer sur le caisson pour le fermer et protéger le store enroulé. Sur une ligne de volets ou de stores installés en façade d'un bâtiment, il est par ailleurs souhaitable, pour des raisons d'esthétique, que tous les stores ou volets s'arrêtent à la même hauteur. Dans le cas de ces dispositifs de fermeture ou de protection solaire, les moyens mécaniques de mesure du déplacement sont généralement constitués d'un dispositif de comptage équipé d'interrupteurs, généralement au nombre de deux, coupant l'alimentation du moteur lorsque le produit est en position complètement rentrée ou en position complètement déployée. Ce dispositif de comptage est certes réglable, mais ces commandes ne permettent toutefois pas d'arrêter le produit de façon égale et répétitive. On constate en effet à l'usage des écarts entre les points d'arrêt de plusieurs installations et des dérives dans le temps sur une même installation. Ces écarts et dérives sont dûs au rodage et à l'usure des parties constitutives du produit lui-même dont la structure se modifie avec le temps, les conditions climatiques, par exemple l'usure qui augmente le pas des lames d'un volet roulant et donc sa longueur ou les pluies qui distendent un store. Le résultat est que sur une ligne de volets ou de stores installés en façade aucun des volets ou des stores n'est arrêté exactement au même endroit ou qu'un store de type cassette n'est pas toujours fermé en position enroulée, ce qui est inesthétique et assure mal la protection du store par la cassette. On connaît des dispositifs destinés à pallier ce défaut, dans lesquels un moyen élastique est intercalé dans la transmission de la commande. Le dispositif de comptage est réglé de manière à interrompre l'alimentation du moteur au-delà du point d'arrêt souhaité, c'est-à-dire au-delà de la butée. Les moyens élastiques permettent au moteur de poursuivre sa rotation pendant un temps après la butée, c'est un temps suffisant pour absorber les écarts et les dérives. De tels dispositifs sont décrits dans les brevets FR 2 431 022 et EP 0 135 731. Dans le premier de ces documents, le moyen élastique est disposé entre le moteur et un point fixe, tandis que dans le second document, le moyen élastique est disposé sur la roue d'entraînement du moteur. Les butées étant constituées d'éléments fixes, le produit entraîné s'arrête donc bien toujours au même endroit et de façon répétitive, mais ces dispositifs présentent toutefois un inconvénient important. Au delà de la butée physique, le produit est soumis à un effort de tension qui est obligatoirement supérieur à l'effort généré par le couple nominal développé par le moteur et qui, se répétant à chaque utilisation, soumet le produit à des efforts anormaux et à une fatigue préjudiciable à sa durée de vie. De plus, ces dispositifs ne peuvent être utilisés que dans le cas où le produit entraîné empêche le moteur de tourner lorsqu'il est en butée. Ces dispositifs ne sont donc pas utilisables pour arrêter une toile en position déroulée, par exemple.

On connaît également des dispositifs d'arrêt comprenant des moyens de détection d'un surcouple appliqué au moteur de manière à couper l'alimentation de ce moteur. Le surcouple peut être créé par le produit venant en butée. Ces dispositifs présentent les mêmes inconvénients que les dispositifs précédents. Un surcouple est nécessaire et il doit être substantiel pour éviter que le moindre frottement parasite ne provoque un arrêt intempestif du moteur. Comme les dispositifs précédents, ils ne sont utilisables que dans le cas où le produit entraîné exerce un effort de freinage sur le moteur, c'est-à-dire lorsqu'une traction est exercée sur une toile où lorsque le produit entraîné est suffisament rigide pour que lorsqu'une butée s'oppose à sa poussée il puisse transmettre la force nécessaire à créer un surcouple suffisant.

La demande de brevet FR 2 671 129 décrit un dispositif d'entraînement d'un corps au moyen d'un moteur électrique comprenant des moyens mécaniques de mesure du déplacement dudit corps et équipés d'interrupteurs actionnés par lesdits moyens mécaniques de mesure initialisant une phase d'alimentation particulière du moteur de manière à assurer une rotation du moteur dans un sens ou dans l'autre.

Le brevet US 5,170,108 finalement décrit un appareil d'entraînement d'un corps, tel qu'une porte, comprenant des moyens optiques pour mesurer la vitesse de déplacement dudit corps.

La présente invention a principalement pour but de pallier les inconvénients des dispositifs connus, c'est-à-dire d'assurer de façon sûre et répétitive un arrêt du corps entraîné contre une butée sans sollicitation exagérée du corps entraîné.

Le dispositif selon l'invention est caractérisé en ce qu'il comprend des moyens pour initialiser un mode particulier de fonctionnement du moteur mis en action par l'actionnement de l'un au moins des interrupteurs des moyens mécaniques de mesure du déplacement du corps entraîné.

Le mode particulier de fonctionnement du moteur peut consister en une alimentation du moteur, pendant une durée temporisée, à tension ou couple réduit ou consister en une coupure de l'alimentation. L'alimentation à couple réduit est réalisée par une réduction de la tension sur la phase auxiliaire du moteur et l'alimentation à tension réduite par une réduction de tension sur les deux phases.

Dans le cas d'un corps tel qu'une porte, un volet ou un store, les moyens mécaniques de mesure du déplacement du corps seront réglés de telle manière que le point d'arrêt déterminé par l'actionnement de l'un des interrupteurs soit situé avant la butée, à une distance suffisante pour absorber les écarts dûs aux imprécisions de réglage, les dérives et autres variations, le corps continuant de se déplacer, pendant le mode de fonctionnement particulier du moteur, jusqu'à ce qu'il arrive en butée.

Dans le cas d'une alimentation à couple réduit ou à tension réduite, la temporisation est telle que le corps arrive à coup sûr contre la butée, mais sans engendrer de surcouple dangereux.

La temporisation peut être remplacée par un dispositif de détection de rotor bloqué qui a pour effet de couper instantanément l'alimentation du moteur.

Un mode de fonctionnement particulier consistant en une coupure de l'alimentation peut être utilisée dans tous les cas où la force de gravité ou la force d'inertie du corps entraîné est suffisante pour entraîner ce corps jusqu'à la butée.

Une sollicitation réduite du corps entraîné pour son arrêt signifie également une sollicitation réduite de la butée. Or, une telle butée peut être constituée accidentellement par un corps humain ou une partie du corps humain. L'invention a par conséquent corollairement pour résultat d'assurer la sécurité des usagers. A cet effet, les moyens mécaniques de mesure du déplacement du corps entraîné peuvent être réglés de telle manière qu'au moins l'un de ses interrupteurs soit actionné avant que la différence entre l'effort maximal que peut fournir le moteur et l'effort résistant à l'avancement du corps, c'est-à-dire la marge d'effort disponible, atteigne une valeur déterminée.

Si ladite valeur déterminée est égale à l'effort d'immobilisation normalisé qu'il est nécessaire d'exercer pour arrêter un corps tel qu'une porte fermant une baie ou un portail, le dispositif selon l'invention permet de se passer de tout autre dispositif de sécurité. En général, les variations de la marge d'effort disponible pendant le déplacement de la porte ou du portail sont telles qu'avec un seul point de réduction du couple moteur, il est possible de maintenir pendant tout le déplacement de la porte ou du portail la marge d'effort disponible dans une fourchette de valeurs inférieures à la valeur prévue par les normes. Au démarrage, c'est-à-dire au début de l'ouverture ou de la fermeture, le couple disponible est le couple nominal du moteur. Il est pratiquement nécessaire pour vaincre l'effort résistant important au démarrage. Le couple moteur et le couple résistant étant tous deux importants, la marge d'effort disponible reste inférieure à la norme. Puis l'effort résistant diminuant, la marge d'effort disponible croît, mais le point d'arrêt, déterminé par les moyens mécaniques de mesure du déplacement de la porte, est atteint avant que la marge d'effort disponible ne dépasse la valeur normalisée. Si la porte n'est pas immobilisée, le couple réduit est suffisant pour entraîner la porte jusqu'à sa butée. L'interruption d'alimentation du moteur peut être assurée par une temporisation ou par détection du blocage du rotor. Une coupure de l'alimentation du moteur au point d'arrêt peut même être envisagée dans le cas où la force de gravité et/ou l'inertie de la porte suffit à assurer le déplacement de la porte jusqu'à sa butée.

Les considérations ci-dessus amènent à penser à utiliser des butées flexibles ou escamotables à résistance limitée, de telle manière qu'elles soient capables d'arrêter le corps en mouvement lorsqu'il est entraîné à couple réduit ou par gravité ou inertie, mais s'escamotant lorsque le moteur redémarre à son couple nominal. De telles butées permettraient d'arrêter le corps en des points intermédiaires.

Le dispositif selon l'invention est également applicable dans une installation ne comprenant pas de butée. Le mode particulier peut précéder un arrêt naturel par frottement, c'est-à-dire précéder une phase de ralentissement suivi d'un arrêt sur une trajectoire libre, sans butée.

Des exemples d'exécution de l'invention seront décrit ci-après en référence au dessin annexé dans lequel :

la figure 1 est une vue en coupe selon I-I de la figure 2, d'un volet roulant conventionnel monté dans une embrasure de fenêtre;

la figure 2 est une vue en coupe selon II-II de la figure 1;

la figure 3 représente, en coupe, un store de type "cassette" représenté en position ouverte et fermée;

la figure 4 représente un schéma d'alimentation à couple réduit pendant une durée temporisée d'un store tel que représenté aux figures 1 à 3;

la figure 5 représente une seconde forme d'exécution d'un schéma d'alimentation à couple réduit pendant une durée temporisée;

la figure 6 représente une variante de la seconde forme d'exécution avec électrofrein;

la figure 7 représente un schéma d'alimentation du moteur à tension réduite et détection de rotor bloqué;

la figure 8 représente un schéma de coupure d'alimentation et actionnement d'un frein après temporisation;

la figure 9 représente un schéma d'alimentation à couple réduit temporisé en montée et de coupure d'alimentation pendant une durée temporisée en descente, et

la figure 10 représente l'allure de la marge d'effort disponible dans le cas d'une application du dispositif en tant que dispositif de sécurité.

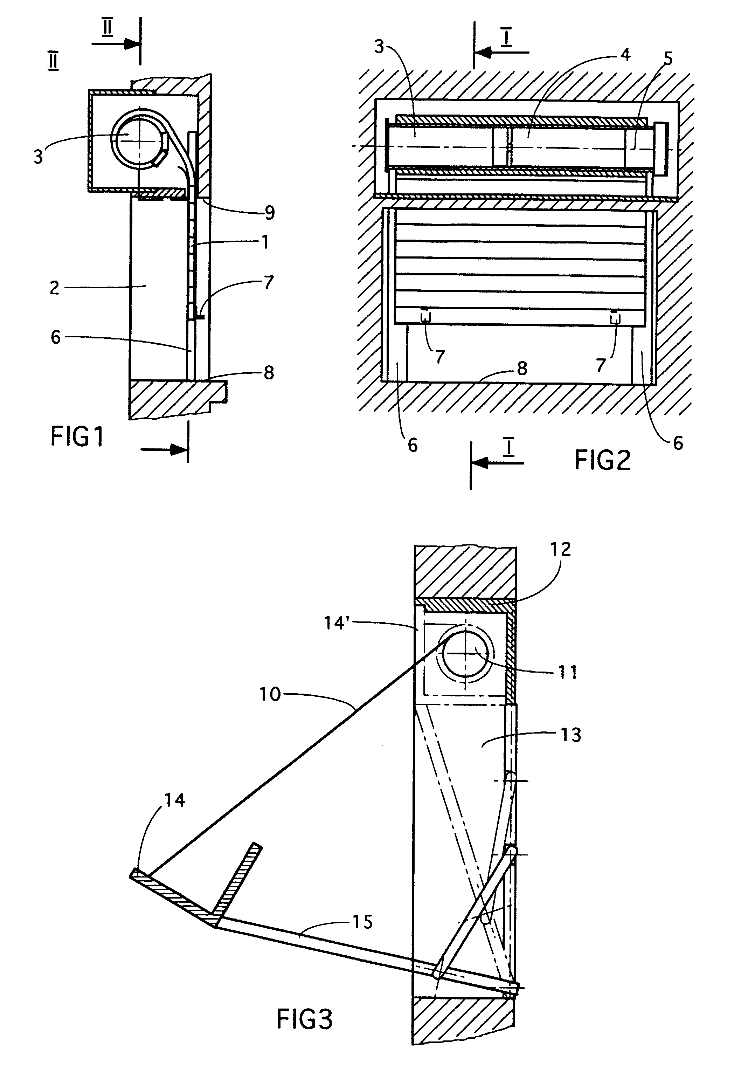

Aux figures 1 et 2 est représenté, à titre d'exemple, un volet roulant 1 destiné à fermer une embrasure 2. Ce volet roulant s'enroule sur un tube d'enroulement 3 entraîné de manière connue par un moteur tubulaire 4 monté dans le tube 3. Le moteur tubulaire 4 est associé à un dispositif de comptage 5 tel que décrit par exemple dans le brevet français 2 525 832 ou dans les brevets FR 2 455 695 et 2 455 349. Ce dispositif de comptage 5 est entraîné par le moteur et comprend deux interrupteurs, un pour chaque sens de rotation, actionnés au bout d'un certain nombre de tours du moteur. Un tel tube d'enroulement moteur tubulaire est décrit par exemple dans les brevets FR 2 480 846 et 2 376 285. Le volet roulant 1 est guidé latéralement par deux glissières 6 et sa dernière lame est munie de deux équerres d'arrêt 7 destinées à venir en butée contre le bord inférieur 8 et le bord supérieur 9 de l'embrasure. On désire que lorsque le volet roulant est complètement fermé, les équerres 7 soient effectivement en butée contre le bord inférieur 8 de l'embrasure et que lorsqu'il est complètement ouvert, les équerres 7 soient en butée contre le bord supérieur 9 de l'embrasure.

Le store de type "cassette" représenté à la figure 3 comprend une toile 10 enroulable sur un tube d'enroulement 11 analogue au tube 3 et logé dans un caisson 12 fixé dans l'embrasure 13. L'extrémité de la toile 10 est attachée à une pièce 14 profilée en L elle même fixée à l'extrémité de deux bras 15 articulés au bas de l'embrasure 13, de chaque côté de celle-ci. Lors de l'enroulement de la toile 10, la pièce profilée 14 vient fermer le caisson 12 comme représenté en 14'. Cette fermeture n'est assurée que si la pièce 14 vient s'appliquer parfaitement contre la partie fixe du caisson 12.

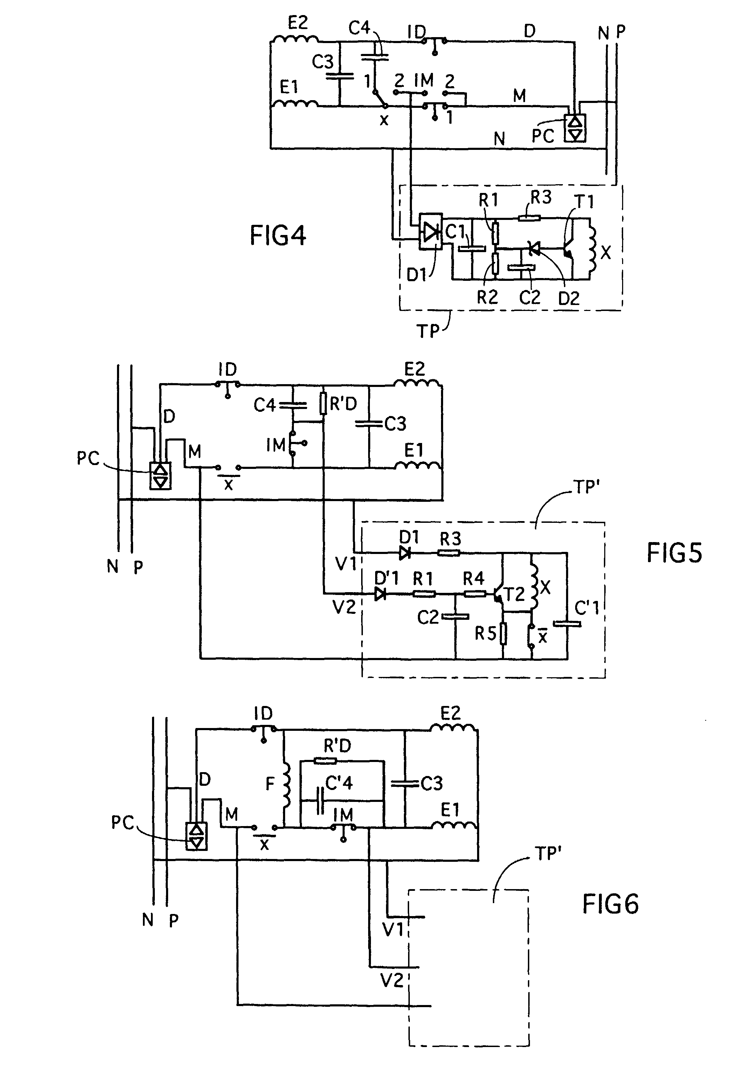

La parfaite fermeture du caisson 12 est assurée par les moyens représentés à la figure 4. Le moteur électrique 4 (selon les figures 1 et 2) est un moteur monophasé asynchrone à condensateur de déphasage. Il est représenté par son enroulement principal E1 et son enroulement auxiliaire E2 et il comprend ici deux condensateurs de déphasage C3 et C4, le condensateur C4 pouvant être branché en parallèle à C3 au moyen d'un contact x. La capacité de C3 + C4 est calculée de manière à permettre au moteur de tourner au couple nominal. Lorsque seul C3 est branché, le moteur tourne à couple réduit.

Le dispositif de comptage 5 comprend deux unités de comptage (telles que décrites dans les brevets cités plus haut) liées cinématiquement au tube d'enroulement 3. L'interrupteur de l'unité de comptage travaillant en montée est remplacé par un inverseur IM actionné lorsque le store atteint, en montée, une position mémorisée dans l'unité de comptage, position correspondant à une position du profilé 14 avant d'arriver en butée contre le caisson 12. L'autre unité de comptage, contrôlant la descente du store, est munie d'un interrupteur conventionnel ID. L'une des bornes de l'inverseur IM, commune aux contacts 1 et 2, est reliée électriquement à la borne auto-alimentée correspondante au "sens montée" d'un point de commande PC tandis que l'une des bornes de l'interrupteur ID est reliée électriquement à la borne auto-alimentée correspondante au bouton "sens descente" de ce point de commande PC. P et N désignent conventionnellement la phase et le neutre d'une alimentation monophasée. Pour faciliter la lecture du schéma, on a désigné par M le conducteur relié au bouton sens montée et par D le conducteur relié au bouton sens descente. L'autre borne de l'interrupteur ID est reliée à l'enroulement auxiliaire E2 et l'autre borne de l'inverseur IM est reliée, par l'intermédiaire du point commun d'un contact inverseur x pouvant basculer d'une position 1 vers une position 2, à l'enroulement principal E1 du moteur. La borne 2 du contact inverseur x est reliée à l'une des bornes de l'inverseur IM.

Ce dispositif comprend en outre un module de temporisation TP comprenant un redresseur constitué d'un pont de diodes D1 et d'un condensateur de lissage C1 et branché au point commun des bornes de x et de IM, un diviseur de tension R1, R2, un condensateur de charge C2 branché parallèlement à la résistance R2, une résistance R3 en série avec un relais X et un transistor T1 branché parallèlement au relais X, la base du transistor T1 étant reliée au point milieu du diviseur de tension R1, R2 à travers une diode Zener D2. R3 limite le courant dans le relais X et dans le transistor T1. Lorsque le module de temporisation est mis en circuit, la tension alternative est redressée au travers du pont de diodes D1 et de C1 et le condensateur C2 se charge progressivement à travers R1. La diode Zener D2 reste bloquée jusqu'à ce que la charge de C2 soit suffisante pour que la tension Zener apparaisse à ses bornes. Tant que la diode Zener D2 est bloquée, le transistor T1 est bloqué et le relais X est alimenté sous une tension suffisante pour opérer le contact x. Lorsque la tension de Zener est atteinte, la diode Zener D2 devient passante. La base du transistor T1 est alors alimentée et T1 conduit, court-circuitant le relais X. Le contact x est alors relâché. Le temps de charge de C2 est calculé de manière à être un peu supérieur au temps nécessaire au store pour se déplacer du point d'arrêt haut mémorisé jusqu'à la butée.

Ce module de temporisation pourrait être remplacé par tout module de temporisation de type monostable ou analogique connu.

Le dispositif représenté fonctionne comme suit : la seconde unité de comptage mémorise le point d'arrêt "store déroulé". Elle est réglée de manière à activer l'interrupteur ID lorsque le store est à la position déroulée souhaitée.

La première unité de comptage mémorise le point d'arrêt "store rentré" et elle est réglée de manière à activer l'inverseur IM un temps avant que le profilé de fermeture 14 ne soit en butée sur le caisson 12, ce temps étant inférieur à celui procuré par le module de temporisation.

On suppose que le store est complètement déroulé. Le dispositif de comptage est au point d'arrêt "store déroulé" et l'interrupteur ID est ouvert. IM est fermé sur la position 1 et le contact x est au repos sur la position 1. Lorsque le bouton "montée" du point de commande PC est activé, la phase P est reliée directement à l'enroulement E1 du moteur et par l'intermédiaire des condensateurs C3 + C4 à l'enroulement E2. Le moteur peut alors fournir son couple nominal. Le store s'enroule. Le dispositif de comptage ayant quitté le point bas mémorisé, l'interrupteur ID se referme. Lorsque le store arrive au point d'arrêt haut mémorisé, l'unité de comptage active l'inverseur IM et son contact passe de la position 1 à la position 2. Le condensateur C4 est mis hors circuit et l'enroulement auxiliaire E2 est alimenté seulement au travers du condensateur C3. Le moteur fournit un couple réduit. En même temps la capacité C2 se charge. Le store s'enroule à couple réduit et le profilé 14 de fermeture vient en butée fermer le caisson 12. Lorsque le condensateur C2 est chargé, la diode Zener D2 conduit, le transistor T1 est passant et le contact x retombe en position 1. Le moteur n'est plus alimenté.

Le schéma représenté à la figure 4 peut être utilisé tel quel pour commander le volet roulant représenté aux figures 1 et 2, c'est-à-dire pour amener de façon sûre les équerres 7 en butée contre le bord supérieur 9 de l'embrasure.

La figure 5 représente une seconde forme d'exécution dans laquelle la temporisation est déclenchée de manière différente. Deux avantages de cette variante par rapport à l'exécution précédente résident dans le fait que l'inverseur IM est remplacé par un simple interrupteur, ce qui permet d'utiliser les dispositifs de comptage standard et dans le fait que le dispositif peut fonctionner avec une commande à action maintenue sans que le module de temporisation TP' reste sous tension. D'autres avantages ressortiront de la description de ce mode d'exécution.

Le module de temporisation TP' comprend une première diode D1 dont l'anode est reliée au neutre N du secteur et une seconde diode D'1 dont l'anode est reliée à une résistance R'D montée en parallèle au condensateur de déphasage C4. La diode D1 est en série avec une résistance limitatrice de courant R3 elle-même en série avec un transistor T2 dont l'émetteur est relié au conducteur M à travers une résistance R5. La diode D'1 est reliée à la base du transistor T2 à travers deux résistances R1 et R4 dont le point commun est relié au condensateur électrolytique C2. Entre le collecteur et l'émetteur du transistor T2 est branché un relais X dont l'une des bornes est reliée au conducteur "Montée" M à travers un contact de repos $\bar{x}$ et une résistance R5 parallèle au contact $\bar{x}$ et l'autre borne est reliée au neutre du secteur à travers la résistance R3 de la diode D1. Un condensateur électrolytique C'1 est en outre branché parallèlement au relais X et à son contact de repos $\bar{x}$.

L'interrupteur IM est en série avec le condensateur C4 et un contact de travail x du relais X destiné à relier deux bornes du conducteur de "Montée" M.

Le fonctionnement du dispositif représenté à la figure 5 est le suivant : lorsque le bouton "Montée" est activé au point de commande PC, une tension V1 provoque l'alimentation du relais X à travers la diode D1 et la résistance R3, d'abord sous forte tension, puis sous tension réduite, à travers la résistance R5, après l'ouverture du contact de repos $\bar{x}$. A la tension base-émetteur près, le seuil de conduction du transistor T2 devient donc V1 x R5/(R5 + X + R3), X représentant la valeur de la résistance du relais X. La valeur du seuil de conduction est fixé entre 5 et 10 V, par exemple par le choix de R5. R3 a pour fonction de limiter le courant à travers le transistor T2. Le contact x étant fermé, l'enroulement principal E1 est alimenté en direct et, l'interrupteur IM étant fermé, l'enroulement auxiliaire E2 est alimenté à travers (C3 + C4). Le moteur fournit son couple nominal.

Lorsque le store arrive au point d'arrêt haut mémorisé, l'unité de comptage ouvre l'interrupteur IM et l'enroulement E2 n'est plus alimenté qu'à travers le condensateur C3. Le moteur fournit un couple réduit et le store continue à s'enrouler, puis vient en butée comme dans le cas précédent.

L'ouverture de l'interrupteur IM a pour effet de faire apparaître une tension V2 sur la borne de l'interrupteur IM relié au condensateur C4. Le condensateur C2 se charge alors progressivement à travers R1 et la diode D'1. Quand la tension aux bornes du condensateur C2 atteint la tension aux bornes de la résistance R5 augmentée du seuil de conduction du transistor T2, alors ce transistor T2 conduit, court-circuitant le relais X dont l'armature retombe. Son contact de repos $\bar{x}$ se referme permettant au condensateur C2 de se décharger. La tension à ses bornes tombe à environ 0,6 V. Le maintien du transistor T2 à l'état conducteur est assuré à travers la diode D'1 et les résistances R'D, R1 et R4, R'D ayant pour fonction de permettre le passage du courant d'alimentation de la base du transistor T2 une fois que l'interrupteur IM est ouvert. R4 sert à limiter l'intensité du courant à travers le transistor lors de la décharge du condensateur C2. Avec la chute du relais X, le contact x s'ouvre, coupant l'alimentation du moteur. Le système est ensuite prêt à repartir avec le condensateur C2 déchargé.

En cas de variation de tension du secteur, les tensions V1 et V2 varient conjointement. Comme ces tensions interviennent dans les deux termes de la comparaison, le dispositif est assez insensible aux variations de tension du secteur.

D'une manière générale ce dernier mode d'exécution présente plusieurs avantages qui sont l'utilisation de micro-contacts simples et de performances de coupure/ ouverture intrinsèquement meilleures que celles d'un relais bon marché qui supporte mal cette fonction dans une boucle de puissance capacitive, un meilleur collage/ décollage du relais, par réaction positive, une durée de la temporisation pratiquement indépendante de la tension du secteur et un réarmement immédiat de la temporisation par décharge du condensateur C2, permettant des utilisations consécutives.

La figure 6 représente une variante d'exécution du mode de réalisation selon la figure 5. Cette variante diffère de la précédente en ce que l'interrupteur IM, le condensateur C4 et la résistance R'D sont disposés en parallèle entre les deux enroulements E1 et E2 du moteur et le conducteur "Montée", de telle sorte que le moteur est alimenté à tension réduite après ouverture de l'interrupteur IM. Cette variante est en outre équipée d'un électrofrein F bloquant en l'absence de courant. Pour le reste le fonctionnement de cette variante est identique du mode d'exécution représenté à la figure 5.

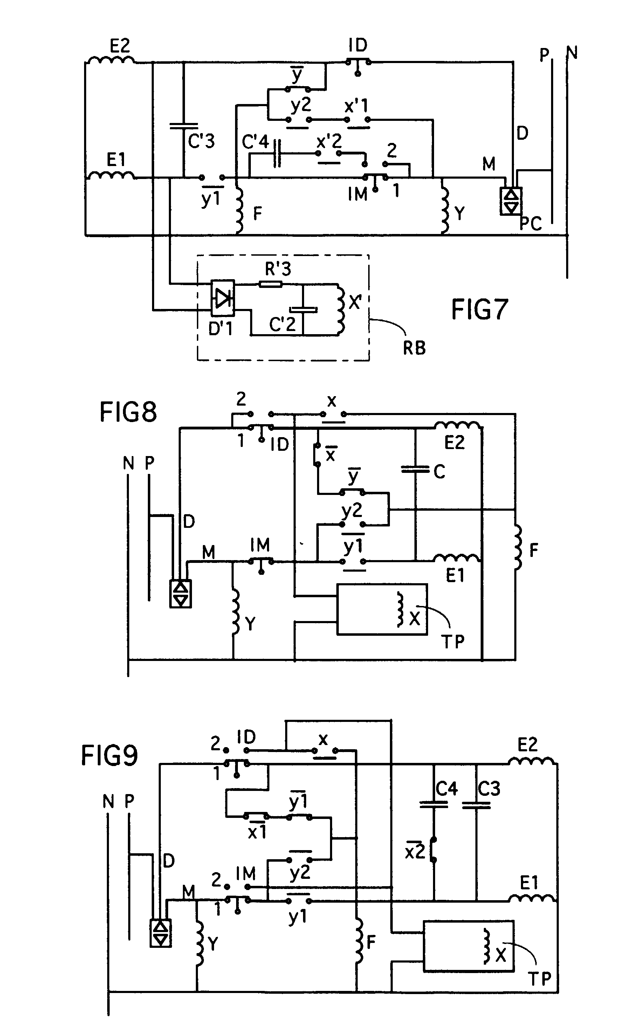

Comme on l'a vu plus haut, il est également possible d'alimenter le moteur à tension réduite à partir du point d'arrêt. Dans ce cas il est intéressant d'utiliser un module de détection de rotor bloqué en lieu et place d'un module de temporisation. Un exemple d'exécution est représenté à la figure 7.

Dans cette exécution, le condensateur de déphasage C'3 est dimensionné de telle sorte que le moteur tourne à son couple nominal lorsque ce condensateur est en circuit. Le condensateur C4 est remplacé ici par un condensateur C'4 qui peut être introduit sur le conducteur de "Montée" M.

Le dispositif comprend un module de détection de rotor bloqué RB constitué d'un pont de diodes D'1, d'une résistance limitatrice de courant R'3, d'un condensateur de lissage C'2 et d'un relais X'. Le pont de diodes D'1 est branché aux bornes du condensateur de déphasage C'3.

Le dispositif comprend en outre un frein électromagnétique F travaillant par défaut de courant et un relais Y branché sur le conducteur de "Montée" M.

Le relais X' comporte deux contacts de travail x'1 et x'2. Le relais Y comporte deux contacts de travail y1 et y2 et un contact de repos $\bar{y}$.

Ce dispositif fonctionne comme suit : lorsque le bouton "montée" et actionné au point de commande PC, le relais Y est alimenté et ses contacts changent d'état. L'enroulement principal E1 du moteur est relié directement à la phase P et l'enroulement auxiliaire E2 est relié à la phase par le condensateur C'3. Le moteur fournit son couple nominal. Une tension existant aux bornes du condensateur C'3, le module de détection de rotor bloqué RB est alimenté et le relais X' est excité. Ses contacts changent d'état et le frein F est alimenté à travers les contacts x'1 et y2.

Lorsque le store atteint son point d'arrêt, en principe son point d'arrêt haut, l'inverseur IM passe de la position 1 à la position 2. L'enroulement E1 est alors alimenté à travers le condensateur C'4 et les contacts x'2 et y1. Le condensateur C'4 entraîne une chute de tension sur les enroulements du moteur et le moteur est donc alimenté à tension réduite.

Lorsque le store, entraîné par une force réduite, arrive en butée, le rotor du moteur est bloqué, ce qui a pour effet de faire chuter fortement la tension aux bornes du condensateur de déphasage C'3. La chute de la tension sur le pont de diodes D'1 entraîne la chute du relais X'. Les contacts x retombent de telle sorte que les enroulements du moteur ne sont plus alimentés. Le frein F, précédemment alimenté à travers les contacts x'1 et y2, n'est plus alimenté et freine.

Dans les applications où il est possible d'utiliser le poids propre du corps entraîné ou son inertie, il est possible de simplement couper l'alimentation du moteur une fois que le corps entraîné a atteint le point d'arrêt mémorisé. C'est le cas, par exemple, de portes basculantes. Une fois le point d'arrêt bas mémorisé atteint, la porte continue en quelque sorte en "roue libre".

Un exemple d'exécution du schéma de commande correspondant est représenté à la figure 8. Dans ce cas, c'est l'interrupteur de l'unité de comptage "descente" qui est remplacé par un inverseur ID. Le dispositif comprend un module de temporisation TP analogue à celui de la figure 4 et un relais auxiliaire Y branché comme dans le cas précédent sur le conducteur "montée". Le dispositif comprend également un frein F travaillant par défaut de courant. Le moteur est de type standard.

Le fonctionnement de ce dispositif est le suivant : la porte étant en position haute, si l'utilisateur actionne le bouton "descente" au point de commande, l'enroulement auxiliaire E2 du moteur est alimenté directement à travers l'inverseur ID non actionné, tandis que l'enroulement principal El est alimenté à travers le condensateur de déphasage C. Le frein F est alimenté à travers ID et les contacts $\bar{x}$ et $\bar{y}$. Le moteur tourne à couple réduit et la porte est entraînée. Lorsque le point bas mémorisé est atteint, l'inverseur ID est actionné et l'alimentation du moteur est interrompue. L'inverseur ID ayant passé à la position 2, le module de temporisation TP est alors alimenté et le relais X est excité. Le frein F est alors alimenté par l'inverseur ID et le contact x. La porte peut donc continuer sa descente "en roue libre" jusqu'à ce qu'elle arrive en butée. Au bout d'un temps t de temporisation, de durée suffisante pour que la porte arrive à coup sûr en butée, le relais X est court-circuité et son armature retombe. Le frein F n'est alors plus alimenté et freine.

Pour la montée, lorsque l'utilisateur actionne le bouton "montée" le relais Y est alimenté et ses contacts changent d'état. L'enroulement principal E1 du moteur est alimenté directement et le moteur tourne à son couple nominal. Le frein F est alimenté à travers le contact y2. Lorsque le point d'arrêt haut est atteint, l'unité de comptage ouvre l'interrupteur IM, ce qui a pour effet de couper simultanément l'alimentation du moteur et celle du frein, de telle sorte que la porte s'arrête au point d'arrêt mémorisé.

Il est possible d'avoir simultanément une descente "en roue libre" avec un freinage temporisé, comme ceci vient d'être décrit, et une montée avec une phase finale à couple réduit pendant une durée temporisée. Le schéma réunissant ces deux possibilités est représenté à la figure 9. Ce schéma est une combinaison des schémas représentés aux figures 4 et 8. Comme dans le cas de la figure 4, le déphasage des phases du moteur est obtenu par un premier condensateur C3 et un second condensateur C4 en parallèle à C3, mis hors circuit par le relais X du module de temporisation TP. Les deux unités de comptage montée et descente sont équipées d'un inverseur IM, respectivement ID. On retrouve un relais auxiliaire Y alimenté en montée et un frein F susceptible d'être mis en circuit parallèlement au moteur.

Le fonctionnement de ce schéma est le suivant : la porte étant en position haute, si l'utilisateur actionne le bouton "descente" au point de commande, l'enroulement auxiliaire E2 du moteur est relié directement à la phase par l'inverseur ID en position de repos, tandis que l'enroulement principal E1 est relié à la phase à travers les condensateurs C3 et C4 en parallèle. Lorsque le point d'arrêt bas mémorisé est atteint, l'inverseur ID passe en position 2 ce qui a pour effet de couper l'alimentation du moteur et d'alimenter le relais X du module de temporisation TP. Le frein F, tout d'abord alimenté à travers ID, $\bar{x}1$ et $\bar{y}1$, est alors alimenté à travers le contact x. La porte descend "en roue libre" jusqu'à ce qu'elle arrive en butée. Ensuite, au bout de la temporisation, le relais X retombe, ce qui a pour effet de couper l'alimentation du frein qui freine.

La porte étant en position fermée (basse) si l'utilisateur actionne le bouton "Montée" au point de commande, le relais Y est excité et ses contacts y1 et y2 se ferment. L'enroulement principal E1 est alors alimenté directement à travers IM et y1, tandis que par le même chemin l'enroulement auxiliaire E2 est alimenté à travers les deux condensateurs C3 et C4, le contact x2 étant fermé. Le moteur tourne alors à son couple nominal.

Lorsque le point haut mémorisé est atteint, l'inverseur IM passe à sa position 2, ce qui a pour effet d'alimenter le module de temporisation TP. Le relais X attire et ses contacts changent d'état. Le moteur est alors alimenté à traves IM en position 2 et les contacts x, y2 et y1. Le condensateur C4 étant mis hors circuit par l'ouverture du contact x2, le moteur tourne à couple réduit. La temporisation écoulée, le relais X retombe. L'ouverture du contact x coupe simultanément l'alimentation du moteur et du frein F.

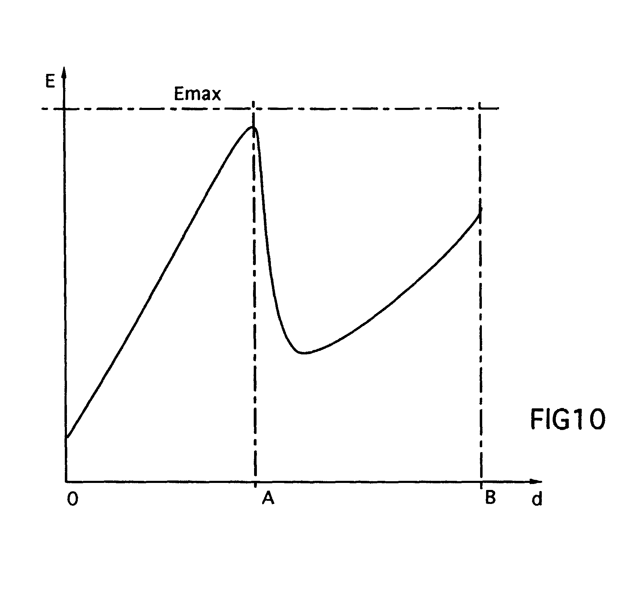

La figure 10 illustre, sous forme de diagramme, une utilisation du dispositif en tant que dispositif de sécurité. Ce diagramme représente l'allure approximative de la marge d'effort disponible E en fonction de la distance d parcourue par un corps entraîné, par exemple une porte ou un portail. Au démarrage, par exemple au début de l'ouverture de la porte (point zéro), le couple disponible est le couple nominal du moteur. La résistance de la porte est importante et la marge d'effort disponible pour arrêter la porte est faible. Ensuite, la résistance au déplacement de la porte diminue et la marge d'effort disponible croît, mais avant qu'elle n'atteigne la marge d'effort maximum acceptable Emax, les moyens mécaniques de mesure du déplacement de la porte provoquent l'alimentation du moteur à couple réduit. La marge d'effort disponible chute brusquement, mais si la porte n'est pas bloquée à cet instant, elle continue d'être entraînée à couple réduit et la marge d'effort disponible reste sensiblement en-dessous de la marge d'effort maxi acceptable, par exemple selon l'allure représentée, jusqu'à ce que la porte arrive en butée (B), c'est-à-dire en position fermée.

## Revendications

**1.** Dispositif d'entraînement d'un corps (1;14) au moyen d'un moteur électrique, comprenant des moyens mécaniques (5) de mesure du déplacement dudit corps liés cinématiquement audit corps et équipés d'interrupteurs (ID,IM) actionnés pas lesdits moyens mécaniques de mesure en certains points du trajet dudit corps, caractérisé en ce qu'il comprend des moyens pour initialiser un mode particulier de fonctionnement du moteur mis en action par l'actionnement de l'un au moins desdits interrupteurs (ID,IM).

**2.** Dispositif selon la revendication 1, caractérisé en ce que les moyens d'initialisation comprennent des moyens d'alimentation du moteur à couple réduit pendant une durée temporisée (TP, x, C4, figure 4; TP', x, C3, figure 5).

**3.** Dispositif selon la revendication 1, caractérisé en ce que les moyens d'initialisation comprennent des moyens d'alimentation du moteur à tension réduite pendant une durée temporisée (TP', x, C'4, figure 6).

**4.** Dispositif selon la revendication 1, caractérisé en ce que les moyens d'initialisation comprennent des moyens d'alimentation du moteur à tension réduite (RB, x'2, C'4) et en ce qu'il comprend en outre des moyens de détection (RB) du blocage du rotor du moteur coupant l'alimentation du moteur lorsqu'un tel blocage est détecté.

**5.** Dispositif selon la revendication 4, dans lequel le moteur est un moteur asynchrone monophasé à condensateur de déphasage, caractérisé en ce que les moyens de détection du blocage du rotor sont constitués d'un relais (X') alimenté, par l'intermédiaire d'un circuit redresseur, par une tension prise aux bornes du condensateur de déphasage (C'3) du moteur.

6. Dispositif selon la revendication 1, comprenant un frein fonctionnant par défaut de courant, caractérisé en ce que les moyens d'initialisation comprennent des moyens (ID) de coupure instantanée de l'alimentation du moteur et des moyens temporisés de coupure (TP, x) de l'alimentation du frein (F).

7. Dispositif d'entraînement selon la revendication 1, dans lequel ledit corps est entraîné en montée et en descente et les moyens mécaniques de mesure du déplacement sont équipés d'un interrupteur correspondant à un point d'arrêt haut et d'un interrupteur correspondant à un point d'arrêt bas, et comprenant en outre un frein (F) fonctionnant par défaut de courant, caractérisé en ce que lesdits interrupteurs sont constitués d'inverseurs (IM, ID), que les moyens d'initialisation comprennent des moyens d'alimentation du moteur à couple réduit pendant une durée temporisée, activés par l'inverseur de point d'arrêt haut (IM) et des moyens de coupure instantanée d'alimentation du moteur et de coupure temporisée d'alimentation du frein activés par l'inverseur de point d'arrêt bas (ID) (Figure 9).

8. Dispositif selon la revendication 2, pour l'entraînement d'un objet entre un point bas et une butée haute, caractérisé en ce que l'un desdits interrupteurs est un inverseur (IM) actionné avant que l'objet, en montée, arrive contre la butée haute, et en ce qu'il comprend un circuit de temporisation (TP) mis sous tension par ledit inverseur (IM).

9. Dispositif selon la revendication 2, pour l'entraînement d'un objet entre un point bas et une butée haute, caractérisé en ce que les moyens mécaniques de mesure du déplacement sont réglés de telle manière, qu'en montée, l'un des interrupteurs (IM) soit actionné avant que l'objet arrive en butée et en ce qu'il comprend un moyen électronique de temporisation (TP') mis sous tension par l'actionnement du bouton de commande "montée" et déclenché par ledit interrupteur (IM) de manière à initialiser la temporisation.

10. Dispositif selon la revendication 6 ou 7, caractérisé en ce que les moyens de temporisation (TP) comprennent un relais (X) excité durant la temporisation de manière à maintenir, par l'un de ses contacts (x) l'alimentation du frein (F) pendant la temporisation.

11. Dispositif selon la revendication 10, pour l'entraînement d'un objet entre un point bas et un point haut et inversement ou horizontalement entre une position ouverte et fermée, caractérisé en ce qu'il comprend en outre un second relais (Y) excité en montée et assurant par ses contacts l'alimentation du frein (F) et du moteur en montée, respectivement en ouverture.

12. Dispositif selon la revendication 7, caractérisé en ce qu'il comprend un circuit de temporisation (TP) comprenant un relais (X) excité pendant la temporisation et assurant, par ses contacts, l'alimentation du moteur à couple réduit en montée et l'alimentation du frein (F) pendant la temporisation, et qu'il comprend un second relais (Y) excité en montée et assurant, en montée, par ses contacts, l'alimentation du frein (F) et l'alimentation du moteur à couple nominal jusqu'à l'actionnement de l'interrupteur du point d'arrêt haut (IM), c'est-à-dire avant l'initialisation de la temporisation.

13. Dispositif d'entraînement selon l'une des revendications 2, 3, 4, 5, 6 ou 11, caractérisé en ce que les moyens mécaniques de mesure du déplacement sont réglés de telle manière qu'au moins l'un de ses interrupteurs soit actionné avant que la différence entre l'effort exercé par le moteur et l'effort résistant à l'avancement dudit corps atteigne une valeur déterminée.

## Patentansprüche

1. Vorrichtung zum Antrieb eines Körpers mittels eines Elektromotors, mit mechanischen Mittels (5) zum Messen der Bewegung dieses Körpers, welche kinematisch mit diesem Körper verbunden und mit Schaltern (ID, IM) versehen sind, die von den erwähnten mechanischen Messmitteln an bestimmten Punkten der Bewegungsbahn des erwähnten Körpers betätigbar sind, dadurch gekennzeichnet, dass sie Mittel zum Initialisieren einer bestimmten Betriebsart des Motors aufweist, welche durch Betätigen wenigstens einer der erwähnten Schalter betätigbar sind.

2. Vorrichtung nach Anspruch 1, dadurch gekennzeichnet, dass die Mittel zum Initialisieren Mittel aufweisen, welche den Motors während einer Verzögerungszeit (TP, x, C4 Figur 4; TP', x, C3, Figur 5) mit verringertem Drehmoment speisen.

3. Vorrichtung nach Anspruch 1, dadurch gekennzeichnet, dass die Mittel zum Initialisieren Mittel aufweisen, welche den Motor während einer Verzögerungszeit (TP', x, C'4, Figur 6) mit verringerter Spannung speisen.

4. Vorrichtung nach Anspruch 1, dadurch gekennzeichnet, dass die Mittel zum Initialisieren Mittel aufweisen, welche den Motor mit verringerter Spannung (RB, x'2, C'4) speisen, und dass sie ferner Mittel zum Erfassen (RB) einer Blockierung des Motorläufers aufweisen, welche die Motorspeisung abschalten, wenn eine solche Blockierung festgestellt wird.

5. Vorrichtung nach Anspruch 4, bei welcher der Motor ein einphasiger Asynchronmotor mit Phasenschieber-Kondensator ist, dadurch gekennzeichnet, dass die Mittel zum Erfassen einer Blockierung des Läufers aus einem Relais (X') bestehen, welches über eine Gleichrichterschaltung mit einer Spannung gespeist wird, die an den Klemmen des Phasenschieber-Kondensators (C'3) des Motors abgenommen wird.

6. Vorrichtung nach Anspruch 1, mit einer Bremse, die bei Stromausfall anspricht, dadurch gekennzeichnet, dass die Mittel zum Initialisieren Mittel (ID), welche die Motorspeisung augenblicklich abschalten, sowie Mittel zum Verzögern (TP, x) der Speisung der Bremse aufweisen.

7. Antriebsvorrichtung nach Anspruch 1, bei welcher der erwähnte Körper in Aufwärts- und in Abwärtsrichtung antreibbar ist und die mechanischen Mittel zum Messen der Bewegung mit einem Schalter, der einem oberen Haltepunkt entspricht, und mit einem Schalter, der einem unteren Haltepunkt entspricht, ausgerüstet sind, und welche ferner eine bei Stromausfall ansprechende Bremse (F) aufweist, dadurch gekennzeichnet, dass die erwähnten Schalter aus Umschaltern (IM, ID) bestehen und dass die Mittel zum Initialisieren einerseits den Motor während einer Verzögerungszeit mit verringertem Drehmoment speisende Mittel, welche durch den dem oberen Haltepunkt entsprechenden Umschalter (IM) betätigbar sind, und andererseits Mittel aufweisen, welche die Motorspeisung augenblicklich und die Speisung der Bremse verzögert abschalten und durch den dem unteren Haltepunkt entsprechenden Umschalter (ID) betätigbar sind (Figur 9).

8. Vorrichtung nach Anspruch 2 zum Antrieb eines Gegenstands zwischen einem unteren Punkt und einem oberen Anschlag, dadurch gekennzeichnet, dass einer der erwähnten Schalter ein Umschalter (IM) ist, der betätigt wird, bevor der Gegenstand bei seiner Aufwärtsbewegung gegen den oberen Anschlag trifft, und dass sie eine Verzögerungsschaltung (TP) aufweist, welche durch den erwähnten Umschalter (IM) an Spannung gelegt wird.

9. Vorrichtung nach Anspruch 2 zum Antrieb eines Gegenstands zwischen einem unteren Punkt und einem oberen Anschlag, dadurch gekennzeichnet, dass die mechanischen Mittel zum Messen der Bewegung derart geregelt werden, dass bei der Aufwärtsbewegung der eine der Schalter (IM) betätigt wird, bevor der Gegenstand auf den Anschlag trifft, und dass sie ein elektronisches Verzögerungsmittel (TP') aufweist, welches durch Betätigung des "Aufwärts"-Steuerknopfs an Spannung gelegt und durch den erwähnten Schalter (IM) ausgelöst wird, so dass die Verzögerung initialisiert wird.

10. Vorrichtung nach Anspruch 6 oder 7, dadurch gekennzeichnet, dass die Verzögerungsmittel (TP) ein Relais (X) aufweisen, welches während der Verzögerung erregt ist, so dass über einen seiner Kontakte (x) die Speisung der Bremse (F) während der Verzögerung aufrechterhalten wird.

11. Vorrichtung nach Anspruch 10 zum Antrieb eines Gegenstands zwischen einem unteren Punkt und einem oberen Punkt und umgekehrt oder horizontal zwischen einer offenen und einer geschlossenen Stellung, dadurch gekennzeichnet, dass sie ausserdem ein zweites Relais (Y) aufweist, welches bei der Aufwärtsbewegung erregt ist und über seine Kontakte die Speisung der Bremse (F) und des Motors bei der Aufwärtsbewegung bzw. der Öffnungsbewegung gewährleistet.

12. Vorrichtung nach Anspruch 7, dadurch gekennzeichnet, dass sie eine Verzögerungsschaltung (TP) mit einem während der Verzögerung erregten Relais (X) aufweist, welches bei der Aufwärtsbewegung über seine Kontakte die Speisung des Motors mit verringertem Drehmoment und die Speisung der Bremse (F) während der Verzögerung gewährleistet, und dass sie ein zweites, bei der Aufwärtsbewegung erregtes Relais (Y) aufweist, welches bei der Aufwärtsbewegung über seine Kontakte die Speisung der Bremse (F) und die Speisung des Motors mit Nennmoment gewährleistet, bis der dem oberen Haltepunkt entsprechende Schalter (IM) betätigt wird, d. h. vor der Initialisierung der Verzögerung.

13. Antriebsvorrichtung nach einem der Ansprüche 2, 3, 4, 5, 6 oder 11, dadurch gekennzeichnet, dass die mechanischen Mittel zur Messung der Bewegung derart geregelt werden, dass wenigstens der eine ihrer Schalter betätigt wird, bevor die Differenz zwischen der vom Motor ausgeübten Kraft und der der Fortbewegung des erwähnten Körpers Widerstand leistenden Kraft einen bestimmten Wert erreicht.

## Claims

1. A device for driving a body (1; 14) by means of an electric motor, comprising mechanical means (5) for measuring the displacement of said body which are kinematically linked to said body and are equipped with switches (ID, IM) actuated by said mechanical measurement means at certain points on the trajectory of said body, characterized in that it comprises means for initializing a particular operating mode of the motor switched in by actuation of at least one of said switches (ID, IM).

2. The device as claimed in claim 1, characterized in that the initialization means comprise means for powering the motor at a reduced torque for a timed duration (TP, x, C4, Figure 4, TP', x, C3, Figure 5).

3. The device as claimed in claim 1, characterized in that the initialization means comprise means for powering the motor at a reduced voltage for a timed duration (TP', x, C'4, Figure 6).

4. The device as claimed in claim 1, characterized in that the initialization means comprise means for powering the motor with reduced voltage (RB, x'2, C'4), the device further comprising means (RB) for detecting that the rotor of the motor is blocked, these means cutting off the power supply of the motor when such a blockage is detected.

5. The device as claimed in claim 4, in which the motor is a single-phase asynchronous motor with a phase-shifting capacitor, characterized in that the means for detecting that the rotor is blocked consist of a relay (X') powered, via a rectifier circuit, by a voltage taken from the terminals of the phase-shifting capacitor (C'3) of the motor.

6. The device as claimed in claim 1, comprising a brake operating through lack of current, characterized in that the initialization means comprise means (ID) for instantaneously cutting off the power supply of the motor and timed means (TP, x) for cutting off the power supply of the brake (F).

7. The drive device as claimed in claim 1, in which said body is driven up and down and the mechanical displacement measuring means are equipped with a switch corresponding to a top stopping point and with a switch corresponding to a bottom stopping point, and further comprise a brake (F) operating through lack of current, characterized in that said switches consist of reversers (IM, ID), and wherein the initialization means comprise means for supplying power to the motor at reduced torque for a timed duration, these means being activated by the top stopping point reverser (IM) and means for instantaneously cutting off the power supply of the motor and for the timed cutting-off of the power supply of the brake which are activated by the bottom stopping point reverser (ID) (Figure 9).

8. The device as claimed in claim 2, for driving an object between a bottom point and a top limit stop, characterized in that one of said switches is a reverser (IM) actuated before, on its way up, comes against the top limit stop, the device comprising a timer circuit (TP) which is powered by said reverser (IM).

9. The device as claimed in claim 2, for driving an object between a bottom point and a top limit stop, characterized in that the mechanical displacement measurement means are set so that, on the way up, one of the switches (IM) is actuated before the object hits the limit stop, the device comprising an electronic timing means (TP') powered by actuation of the "up" operating button and triggered by said switch (IM) so as to initialize the timing.

10. The device as claimed in claim 6 or 7, characterized in that the timer means (TP) comprise a relay (X) which is energized during the timed period so as to maintain the power supply of the brake (F) during the timed period, by means of one of its contacts (x).

11. The device as claimed in claim 10, for driving an object between a bottom point and a top point and vice versa or horizontally between an open position and a closed position, characterized in that it comprises a second relay (Y) which is energized on the way up and which, by means of its contacts, powers the brake (F) and the motor on the way up, or respectively on opening.

12. The device as claimed in claim 7, characterized in that it comprises a timer circuit (TP) comprising a relay (X) which is energized during the timed period and which, by means of its contacts, powers the motor at reduced torque on the way up and powers the brake (F) during the timed period, and which comprises a second relay (Y) which is energized on the way up and which, on its way up, by means of its contacts, powers the brake (F) and powers the motor at nominal torque until the top stopping point switch (IM) is actuated, that is to say before the timed period is initialized.

13. The driving device as claimed in any one of the claims 2, 3, 4, 5, 6 or 11 characterized in that the mechanical displacement measurement means are set so that at least one of its switches is actuated before the difference between the force exerted by the motor and the force resisting the advancement of said body reaches a given value.

FIG1

FIG2

FIG3

FIG4

FIG5

FIG6

FIG7

FIG8

FIG9

FIG10